# FASCICULE DE BREVET EUROPEEN

(11) **EP 2 721 780 B1**
(45) Date de publication et mention de la délivrance du brevet: **08.08.2018**
(21) Numéro de dépôt: 12731555.4
(22) Date de dépôt: 11.06.2012
(51) Int. Cl.: H04L 12/24, H04L 12/28

(54) **PROCEDE D'ASSISTANCE A L'INSTALLATION D'UN SYSTEME DOMOTIQUE ET BOITIER PILOTE D'INSTALLATION ASSOCIE**
VERFAHREN ZUR UNTERSTÜTZUNG BEI DER INSTALLATION EINES DOMOTIKSYSTEMS UND ENTSPRECHENDES INSTALLATIONSTREIBERPACKAGE
METHOD FOR ASSISTING IN THE INSTALLATION OF A HOME AUTOMATION SYSTEM, AND RELATED INSTALLATION DRIVER PACKAGE

(30) Priorité: 16.06.2011 FR 1155284
(43) Date de publication de la demande: 23.04.2014
(73) Titulaire: Voltalis SA, 75008 Paris (FR)
(72) Inventeur: HEINTZ, Bruno, F-75015 Paris (FR); OURY, Jean-Marc, F-75007 Paris (FR); LEFEBVRE DE SAINT GERMAIN, Hugues, F-69110 Sainte-Foy-Lès-Lyon (FR); BIVAS, Pierre, F-78110 Le Vesinet (FR); BINEAU, Mathieu, F-Versailles 78000 (FR)
(74) Mandataire: Hervouet-Malbec, Sylvie
(86) Numéro de dépôt international: PCT/FR2012/051298
(87) Numéro de publication internationale: WO 2012/172242

(56) Documents cités:
- WO-A1-2010/017588
- WO-A2-2008/017754
- WO-A2-2008/102306
- WO-A2-2009/040761
- FR-A1- 2 880 489

## Description

La présente invention est relative à l'installation à grande échelle de boîtiers domotiques communiquant aussi bien entre eux dans un réseau interne, qu'avec une plateforme centrale hébergée par un serveur Internet.

La présente invention s'applique notamment, bien que non exclusivement, au déploiement d'un système de mesure et de modulation en temps réel de la consommation électrique d'une pluralité d'appareils électriques.

La Demanderesse a développé un tel système de mesure et de modulation, dont le principe est décrit notamment dans le document WO2008/017754, et dont les principaux éléments sont représentés schématiquement sur la figure 1. Ce système de mesure comporte au moins un boîtier modulateur 1 sur lequel peuvent être connectés individuellement ou en série sur des boucles de courant, plusieurs appareils électriques 2 (tels que des chauffe-eau, des radiateurs électriques, des climatiseurs...). Le boîtier modulateur 1 est apte à mesurer en temps réel les tensions et les courants consommés par ces appareils électriques 2, et à envoyer périodiquement, par exemple toutes les dix minutes, les mesures à une plateforme externe 3 hébergée par un serveur Internet. Cet envoi périodique des mesures s'effectue par l'intermédiaire d'un modem 4 de communication sans fil intégré dans un boîtier pilote 5 du système, le modem 4 de communication sans fil permettant une connexion 6 à la plateforme Internet 3 de type téléphonie par paquet, tel que le GPRS, la 3G ou la 4G. Alternativement, la connexion au réseau Internet peut s'effectuer via une liaison de type Ethernet. Le boîtier pilote 5 est préférentiellement distinct du boîtier modulateur 1 et relié à ce dernier par une liaison filaire 7, de préférence par courant porteur de ligne ou CPL. Pour ce faire, chacun des boîtiers modulateur 1 et pilote 5 est équipé d'un modem CPL (non représenté). Le boîtier pilote 5 peut ainsi être relié à une pluralité de boîtiers modulateurs 1 dont il collecte les mesures pour envoi à la plateforme externe 3. Le boîtier pilote 5 comporte avantageusement un port USB (non représenté), qui permet d'accepter le branchement de modules complémentaires tels que des modems radio courte portée ou des capteurs de température. Ainsi, on peut prévoir également que la transmission des mesures depuis les boîtiers modulateurs 1 s'effectue par cette voie radiofréquence. Les mesures reçues par la plateforme externe 3 sont stockées et peuvent être visualisées à tout moment et depuis n'importe quel lieu par l'utilisateur qui peut se connecter sur son espace utilisateur sur Internet par tout moyen connu. La plateforme 3 est en outre susceptible d'envoyer au boîtier pilote 5, par la connexion sans fil 6 de type téléphonie par paquet, des ordres pour commander l'interruption de l'alimentation de tout ou partie des appareils électriques 2 reliés aux différents boîtiers modulateurs 1 pendant une durée prédéterminée. Les périodes d'interruption sont généralement inférieures à la demi-heure, de sorte que les utilisateurs concernés par les coupures de tout ou partie de leurs appareils électriques, tels que les chauffages ou climatiseurs, ne subissent aucune gêne. Le contrôle de l'alimentation s'effectue par l'intermédiaire des boîtiers modulateurs 1. Grâce à ce système, et outre la possibilité de suivi des consommations par chaque utilisateur, on permet de gérer simultanément au niveau de la plateforme centralisée 3 une grande quantité de boîtiers modulateurs 1 et boîtiers pilotes 5 et de moduler plus facilement, à une échelle communale, départementale, régionale ou nationale, la puissance électrique consommée par un ensemble d'utilisateurs, en particulier lors de pics de consommation, sans qu'il soit nécessaire pour les fournisseurs d'énergie électrique de produire plus d'électricité.

L'installation d'un réseau domotique, tel que les boîtiers modulateurs et pilotes décrits précédemment, au domicile d'un utilisateur, comporte plusieurs phases qui sont fortement dépendantes de l'environnement de l'installation :
Il est tout d'abord nécessaire de connaître certaines informations spécifiques à l'utilisateur, telles que son type d'installation (nombre de boîtiers modulateurs et de boîtiers pilotes installés, appairage des différents boîtiers et des équipements électriques, type de connexion à Internet...), ses coordonnées, son forfait électrique, ou le type d'habitation. Ces données sont traditionnellement collectées par un technicien sur place lors de l'installation, sur papier ou sur tablette informatique, pour être ensuite saisies manuellement par un opérateur dans la base de données du système. Il en résulte des retards, souvent de plusieurs jours, dans l'insertion des données dans la base, ainsi que des risques importants de saisir des données incomplètes voire incorrectes, les risques étant accrus du fait de la double saisie des informations.

En outre, la connexion des boîtiers pilotes au réseau Internet externe pouvant se faire par ADSL, ou de préférence par liaison mobile (GPRS/3G), il est nécessaire, dans ce dernier cas, de tester les connexions offertes par tous les opérateurs mobiles existant, afin de choisir celle qui présente les meilleures conditions, en termes de réception, de débit, et éventuellement de coûts. Ce n'est qu'une fois l'opérateur mobile choisi que les boîtiers pilotes peuvent être équipés de la carte SIM correspondant à cet opérateur mobile. Aujourd'hui, ce test est fastidieux à réaliser car les boîtiers pilotes ne peuvent être équipés que d'une seule carte SIM pour des raisons d'encombrement et de coûts.

Par ailleurs, il faut définir très précisément le type et les caractéristiques des appareils électriques connectés à chaque voie du ou des boîtiers modulateurs, connecter le cas échéant les boîtiers modulateurs au meilleur boîtier pilote lorsqu'il est prévu d'en installer plusieurs, tester l'installation complète, ainsi que chaque appareil constitutif du système, et gérer les pannes de certains appareils (surtout les appareils relais), ou l'impact de la désinstallation de ces appareils. Aucun des tests précédents ne s'effectue aujourd'hui de façon automatique, et le respect des différents tests par le technicien installateur n'est pas garanti. Une procédure d'installation complète et fiable peut ainsi requérir plusieurs jours, et nécessiter plusieurs déplacements sur site du technicien installateur.

Il en résulte une procédure qui peut s'avérer coûteuse dans la plupart des cas. Le document WO2008/102306 décrit l'utilisation d'un outil de réglage comportant un lecteur et un émetteur de code barre pour permettre l'installation d'un système domotique comportant des émetteurs d'ordre ou points de commande et des récepteurs d'ordre, les émetteurs d'ordre et récepteurs d'ordre communiquant entre eux dans un réseau local sans fil. L'objectif de la présente invention est de simplifier, optimiser, et automatiser l'installation à grande échelle de boîtiers communiquant et d'éléments domotiques dans des environnements variables. L'invention s'applique pour tout système dans lequel un ou plusieurs boîtiers communiquant sont susceptibles d'échanger des informations, d'une part avec un réseau Internet via une communication sans fil de type téléphonie par paquet, et d'autre part avec une pluralité d'éléments domotiques via une communication locale de type courant porteur de ligne ou sans fil.

Plus précisément, la présente invention a pour objet un procédé d'assistance à l'installation d'un système domotique selon la revendication 1. Ainsi, l'invention permet d'optimiser les phases d'installation du système domotique. Selon d'autres caractéristiques préférentielles de l'invention:
- le procédé peut comporter en outre les étapes de saisie locale, à partir dudit boîtier pilote d'installation, d'informations spécifiques à l'installation et de transmission automatique desdites informations spécifiques depuis le boîtier pilote d'installation vers la plateforme centrale par l'intermédiaire de ladite connexion sans fil ou d'une connexion Ethernet. On évite ainsi les erreurs et la perte de temps dues à la double saisie.
- l'étape de recherche peut comporter les sous-étapes de connexions successives par ledit boîtier pilote d'installation à ladite plateforme centrale via chaque opérateur mobile possible et transfert d'un fichier court, de mesure et stockage des paramètres techniques de chaque connexion à partir du fichier court transféré et de calcul d'une somme pondérée desdits paramètres techniques pour chaque connexion et sélection de l'opérateur mobile auquel correspond la plus grande somme pondérée.

- les paramètres techniques comprennent la qualité du signal correspondant au fichier transféré et le débit de la connexion.
- le procédé peut comporter en outre une sous-étape de récupération automatique de paramètres supplémentaires relatifs à la tarification de chaque opérateur mobile ; dans ce cas, la somme pondérée dépend également de ces paramètres supplémentaires.
- l'étape d'appairage pré citée peut comporter les sous-étapes de balayage par le boîtier pilote d'installation du réseau domotique local et d'établissement d'une liste des boîtiers communiquant et pilotes présents sur le réseau domotique local, de recherche d'un boîtier pilote disponible et d'appairage avec ledit boîtier pilote disponible, et de transmission par le boîtier pilote d'installation des informations liées à chaque appairage à la plateforme centrale via la connexion sans fil.
- les boîtiers communiquant comprennent par exemple au moins un boîtier modulateur apte à mesurer en temps réel des tensions et des courants consommés par au moins un appareil électrique qui lui est connecté, et à transmettre les mesures à la plateforme centrale par l'intermédiaire du boîtier pilote. Le boîtier pilote et le boîtier modulateur peuvent être intégrés dans un même boîtier.
- le boîtier modulateur peut également recevoir des ordres de modulation ou de programmation, ou encore des mises à jour de logiciel, de la plateforme centrale par l'intermédiaire du boîtier pilote.
- pour cette application particulière, les étapes de tests comportent notamment la mesure, sur commande du boîtier pilote d'installation, de la tension et du courant dudit appareil électrique par le boîtier modulateur et la transmission de cette mesure au boîtier pilote d'installation ; la vérification de la réussite d'un ordre de modulation puis de fin de modulation entre ledit boîtier pilote et ledit boîtier modulateur.
- le réseau domotique local peut être un réseau courant porteur de ligne ou un réseau radiofréquence.

La présente invention a également pour objet un boîtier pilote d'installation portatif selon la revendication 12. Des modes de réalisation supplémentaires sont définis dans les revendications dépendantes. Différents aspects de l'invention apparaîtront dans la description suivante, faite en référence aux figures annexées, dans lesquelles :
- la figure 1, décrite ci-avant, représente schématiquement un système connu de mesure et de modulation en temps réel de la consommation électrique d'une pluralité d'appareils électriques;
- la figure 2 illustre schématiquement un stade intermédiaire de l'installation d'un système domotique selon l'invention, tel qu'un système de mesure et de modulation en temps réel de la consommation électrique d'une pluralité d'appareils électriques;
- la figure 3 donne un synoptique des différents étapes possibles lors de l'installation du système domotique de la figure 2 ;
- la figure 4 représente les étapes mises en oeuvre selon l'invention pour la recherche d'un opérateur mobile ;
- la figure 5 illustre les étapes correspondant à l'appairage des boîtiers communiquant.

Dans la suite de l'exposé, les éléments communs aux différentes figures portent les mêmes références. L'invention va être décrite dans le cadre non limitatif de l'installation des boîtiers pilotes et de boîtiers modulateurs faisant partie d'un système de mesure et de modulation en temps réel de la consommation électrique d'une pluralité d'appareils électriques.

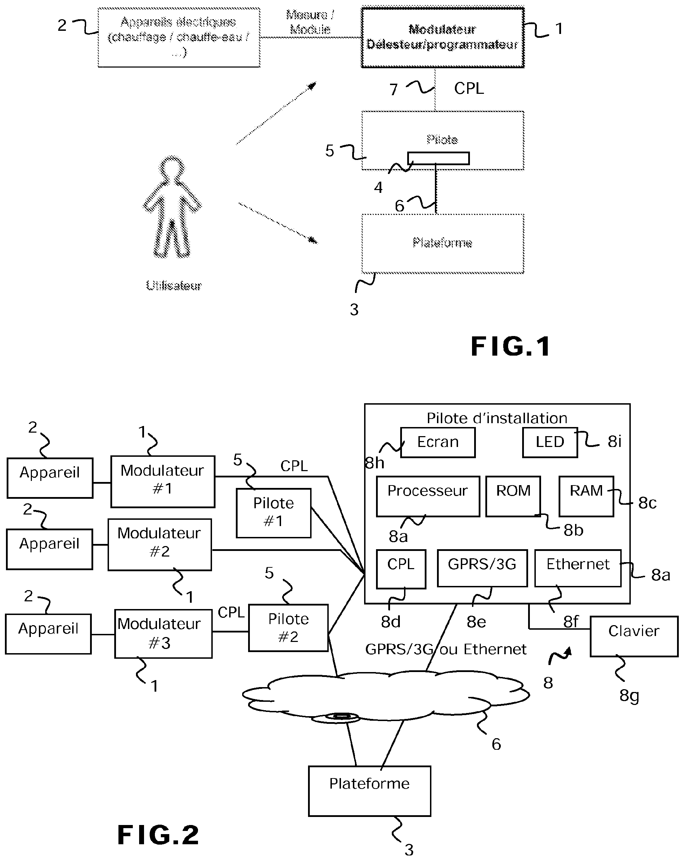

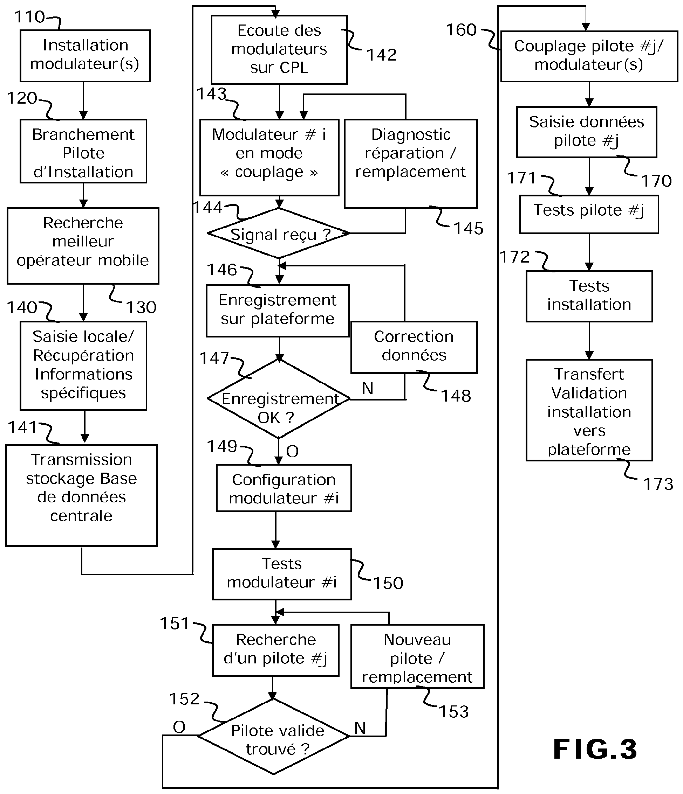

On se propose d'expliciter une procédure d'installation conforme à la présente invention dans le cadre du système représenté schématiquement sur la figure 2, à un stade intermédiaire de la procédure d'installation. On se reportera par ailleurs dans la suite à la figure 3 pour suivre les étapes de la procédure d'installation selon l'invention.

Dans cet exemple, il est prévu d'installer au domicile d'un utilisateur, trois boîtiers modulateurs 1, chacun destiné à être relié à un appareil électrique 2, et deux boîtiers pilotes 5 avec lesquels les boîtiers modulateurs 1 pourront échanger des données, de préférence par courant porteur de ligne. Cette installation va être optimisée selon l'invention grâce à l'utilisation d'un boîtier pilote d'installation 8 portatif.

Ce boîtier 8 comprend essentiellement une carte électronique équipée d'un processeur 8a, d'une mémoire morte 8b et d'une mémoire vive 8c, de premiers moyens lui permettant d'échanger localement des données avec les boîtiers modulateurs 1 et les boîtiers pilotes 5 via une connexion domotique (ici un modem CPL 8d), et de seconds moyens lui permettant d'accéder au réseau Internet 6 pour échanger des données avec la plateforme centrale 6, en particulier un modem GPRS/3G 8e, et un modem Ethernet 8f. Les différents modems peuvent être intégrés dans le boîtier 8, ou sous la forme de modules externes, de type modules USB, à brancher sur un port USB (non représenté) du boîtier 8. Le boîtier 8 pilote d'installation est configuré pour permettre une connexion pour chacun des opérateurs mobiles nationaux. Typiquement, il intègre les différentes cartes SIM dédiées aux différents opérateurs. Le boîtier 8 comprend en outre différents modules d'interface homme-machine, tels qu'un clavier 8g, un écran 8h et des moyens indicateurs, typiquement des LEDs 8i. L'écran 8h peut être suffisamment petit pour être intégré dans le boîtier. Le clavier 8g est de préférence un dispositif périphérique qui peut être relié au boîtier 8 par une connexion type USB. L'écran 8h peut également être un écran tactile, permettant alors de se passer de clavier. Différentes routines logicielles destinées à être exécutées par le microprocesseur pour l'assistance à l'installation sont enfin stockées dans la mémoire morte 8b.

Le logiciel du boîtier 8 peut d'ailleurs être mis à jour automatiquement à partir de la plateforme centrale 3 après l'établissement d'une connexion Internet, soit grâce à la liaison sans fil 8e, soit grâce à la liaison Ethernet 8h.

Sur la figure 2, les trois boîtiers modulateurs 1 ont déjà été positionnés et reliés à leur appareil électrique 2 respectif. En outre, les deux boîtiers pilotes 5 ont également été positionnés et le boitier modulateur #3 a déjà été apparié au boîtier pilote #2. On rappelle que chaque boîtier modulateur 1 peut commander de façon indépendante une pluralité d'appareils électriques. De même, un même boîtier pilote 5 peut être relié à plusieurs boîtiers modulateurs 1. Dans la structure de réseau donnée à titre d'exemple sur la figure 2, il reste à effectuer l'appairage du boîtier modulateur #1 et du boitier modulateur #2 à l'un des boîtiers pilotes installés. Cet appairage va pouvoir être effectué par l'intermédiaire du boîtier pilote d'installation 8 comme cela va à présent être détaillé dans l'explication qui suit d'une procédure complète d'installation, faite en référence aux figures 3 à 5 :
A l'issue d'une première étape 110, les différents boîtiers modulateurs 1 sont déjà positionnés et susceptibles de communiquer sur le réseau domotique local, ici le réseau CPL. Le technicien installateur procède au branchement du boîtier 8 (étape 120), et notamment à sa connexion au réseau CPL. A noter que les étapes 110 et 120 pourraient être interverties. Le boîtier pilote d'installation 8 va alors pouvoir effectuer (étape 130) une recherche de l'opérateur mobile offrant la meilleure connexion GPRS/3G (ou toute autre connexion cellulaire) au réseau Internet. Cette recherche peut être lancée automatiquement par le processeur 8a, dès le branchement du boîtier 8, ou sur commande manuelle du technicien, via par exemple le clavier 8g.

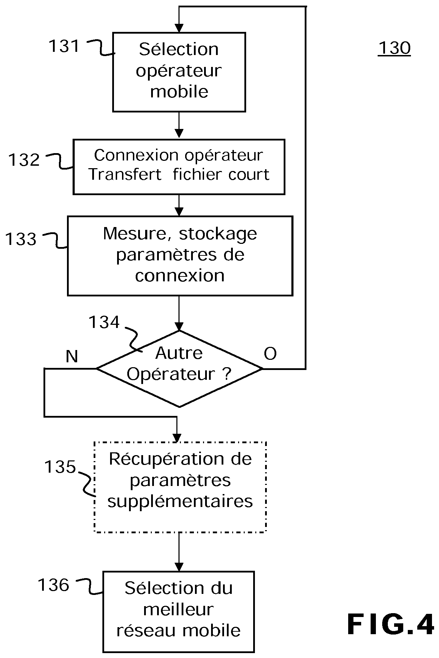

Les détails de la procédure de recherche, implémentée par un module logiciel stocké dans la ROM 8b, sont explicités sur la figure 4 :
Le boîtier pilote d'installation 8 commence par sélectionner un opérateur parmi les opérateurs mobiles dont il dispose dans sa configuration (sous-étape 131), puis procède à une tentative de connexion à la plateforme centrale 3 via l'opérateur sélectionné et de transfert d'un fichier court (sous-étape 132). En cas d'échec de connexion, la procédure de recherche est relancée pour un autre opérateur. Sinon, les paramètres de la connexion, en particulier la qualité du signal correspondant au fichier transféré et le débit de la connexion, sont mesurés à partir du fichier court transféré, et sont stockés, de préférence au niveau du boîtier 8 (sous-étape 133). Une sous-étape 134 permet de savoir si tous les opérateurs mobiles possibles ont été testés, les sous-étapes 131 à 133 étant réitérées pour tous les opérateurs mobiles possibles. A l'issue des sous-étapes précédentes, le boîtier pilote d'installation 8 dispose donc des paramètres techniques liés à chaque connexion. Optionnellement, il peut également prendre en compte d'autres paramètres tels que la tarification de chaque opérateur, ou des accords spécifiques de coûts entre l'opérateur mobile et l'opérateur de la plateforme 3. Ces paramètres supplémentaires peuvent être soit stockés dans le pilote d'installation, soit récupérés par une connexion du pilote d'installation à la plateforme centrale 3 (sous-étape 135). Le boîtier 8 peut alors sélectionner (sous-étape 136) celui des opérateurs qui offre la meilleure connexion. Pour ce faire, une note est attribuée à chaque connexion, en effectuant une somme pondérée de chaque paramètre, et l'opérateur mobile pour lequel la connexion offerte correspond à la note la plus importante est sélectionné. Le technicien installateur peut suivre avantageusement tout ou partie de l'étape de recherche sur l'écran 8h.

A la fin de la procédure de recherche 130, il connaît ainsi l'opérateur mobile finalement élu, et pourra équiper chacun des boîtiers 5 pilotes prévus dans l'installation (boîtiers #1 et #2 sur figure 2) avec la carte SIM correspondant à cet opérateur mobile.

A ce stade de l'installation, le technicien installateur peut avantageusement profiter de la connexion Internet existante entre le boîtier pilote installation et la plateforme centrale 3 pour collecter toutes les informations spécifiques liées à l'installation. Il peut ainsi saisir localement, par l'intermédiaire du clavier 8g, un certain nombre de données, telles qu'un identifiant du site d'installation, un identifiant relatif au technicien installateur, la topologie du réseau à installer, les noms et coordonnées de l'utilisateur, la puissance souscrite avec son fournisseur d'énergie électrique, le type de domicile, la superficie du domicile... (étape 140 de la figure 3). Il peut optionnellement récupérer également certaines informations communiquées par la plateforme centrale 3. Toutes les informations spécifiques sont alors automatiquement transmises à la plateforme centrale 3 par le boîtier pilote d'installation 8 pour stockage dans la base de données centralisée (étape 141). La fin de l'étape 141 correspond à une validation de la connexion Internet et de la saisie des données spécifiques. Le technicien installateur peut être averti de la fin de cette étape 141, par exemple par mise sous tension d'une des LEDs 8i présentes sur le boîtier pilote d'installation 8 et/ou par affichage sur l'écran 8h.

La procédure d'installation se poursuit avec la recherche, la configuration et le test de tous les boîtiers modulateurs 1 installés lors de l'étape 110. Le boîtier pilote d'installation 8 se place tout d'abord dans un mode d'écoute du réseau domotique local (ici le réseau CPL), apte à recevoir tous les signaux émis par les boîtiers modulateurs (étape 142). Cela peut être déclenché automatiquement, à l'issue de l'étape 141, ou de préférence, sur saisie d'une commande par le technicien installateur via le clavier 8g. Ce dernier place alors l'un des boîtiers modulateurs dans un mode dit de « couplage », par exemple par appui sur un bouton dédié présent sur ce boîtier (étape 143), mode pendant lequel le boîtier modulateur concerné va émettre un signal CPL. Le boitier pilote d'installation 8 teste alors si le signal CPL est bien reçu (étape 144). En cas de non réception pendant un certain délai, le technicien installateur devra revérifier l'installation du boîtier modulateur concerné. En cas d'échec après vérification, le technicien installateur est informé sur l'écran 8h de la nécessité de remplacer le boîtier modulateur 1 par un autre (étape 145). Les étapes 143, 144, et éventuellement 145 sont alors réitérées pour ce boîtier de remplacement. Dès lors qu'un signal CPL (soit émis par le boîtier modulateur initialement installé, soit par celui de remplacement) est reçu par le pilote d'installation 8, ce dernier extrait du signal CPL reçu l'identifiant correspondant au boîtier modulateur et le transmet automatiquement à la plateforme centrale 3, via la connexion GPRS/3G, en vue de son enregistrement (étape 146). La plateforme centrale 3 vérifie alors si l'identifiant reçu est cohérent avec les données stockées au préalable (étape 147). Si l'enregistrement ne peut être effectué, la plateforme centrale 3 demande au pilote d'installation de corriger les données (étape 148). Si l'enregistrement est au contraire validé, le technicien installateur en est directement informé, via un message approprié affiché sur l'écran 8h et/ou la mise sous tension d'une des LEDs 8i. Le technicien installateur peut alors procéder à la configuration du boîtier modulateur 1 concerné (étape 149), et notamment à son raccordement aux différents appareils électriques qu'il doit contrôler et à la sortie numérique du compteur électrique installé au domicile de l'utilisateur lorsque celle-ci existe.

A l'issue de l'étape 149, le technicien installateur commande alors le pilote d'installation 8 pour que ce dernier lance une série de tests destinés à vérifier le bon fonctionnement du boîtier modulateur #i concerné (étape 150). Les tests effectués sont notamment les suivants :

### ∘ Mesure / modulation de chaque voie du boîtier modulateur #i :

Sur ordre donné par le boîtier pilote d'installation 8 au boîtier modulateur #i via un signal de commande CPL, le boîtier modulateur #i effectue des mesures des tensions et des courants des appareils électriques qui lui sont connectés, et communique ces mesures via le courant porteur de ligne au boîtier pilote d'installation 8 pour validation du test.

### ∘ Connexion à la sortie numérique du compteur électrique (si présente) :

Sur ordre donné par le boîtier pilote d'installation 8 au boîtier modulateur #i via un signal de commande CPL, le boîtier modulateur #i communique au boîtier pilote d'installation, via le courant porteur de ligne, les données qu'il reçoit de la sortie numérique du compteur. Le boîtier pilote d'installation 8 valide ou non le test en vérifiant que les données sont non nulles et cohérentes.

### ∘ Connexion appareils de mesure (liaison radio ou CPL) :

Des appareils de mesure, par exemple des capteurs de température, peuvent être reliés au boîtier modulateur #i. Il convient dans ce cas de tester le boîtier modulateur par rapport à cette connexion. Sur ordre donné par le boîtier pilote d'installation 8 au boîtier modulateur #i via un signal de commande CPL, le boîtier modulateur #i demande à l'appareil de mesure de lui transmettre une mesure, et communique la mesure via le courant porteur de ligne au boîtier pilote d'installation. Le boîtier pilote d'installation 8 valide ou non le test en vérifiant que la mesure reçue est cohérente avec celle obtenue d'un appareil de mesure similaire et étalonné sur le pilote d'installation.

Les étapes 143 à 150 décrites ci-dessus sont reproduites pour chaque boîtier modulateur 1 présent dans l'installation. Il convient de noter que l'étape 150 peut être lancée soit immédiatement sur le boîtier modulateur #i concerné par l'enregistrement (étape 147), soit une fois que tous les boîtiers modulateurs ont été configurés (étape 149).

La procédure d'installation se poursuit avec la recherche par le boîtier pilote d'installation 8 d'un boîtier pilote 5 valide (étape 151). Par « valide », on entend un boîtier pilote 5 présent sur le réseau domotique local CPL existant, apte à échanger des signaux CPL avec une qualité suffisante, et présentant au moins une entrée/sortie non encore appariée avec un boîtier modulateur. Dans l'exemple de la figure 2, le boîtier pilote #1 pourra être considéré comme valide dans le sens où il n'a pas encore été apparié avec un boîtier modulateur. Si aucun boîtier pilote 1 valide n'a été détecté (étape 152), le technicien installateur peut décider de remplacer un boîtier pilote existant, ou d'installer un boîtier pilote supplémentaire (étape 153). Lors de cette étape, il est possible qu'un boîtier pilote antérieurement installé, par exemple dans un appartement voisin, soit reconnu comme valide, auquel cas il ne sera pas nécessaire d'installer un nouveau boîtier pilote.

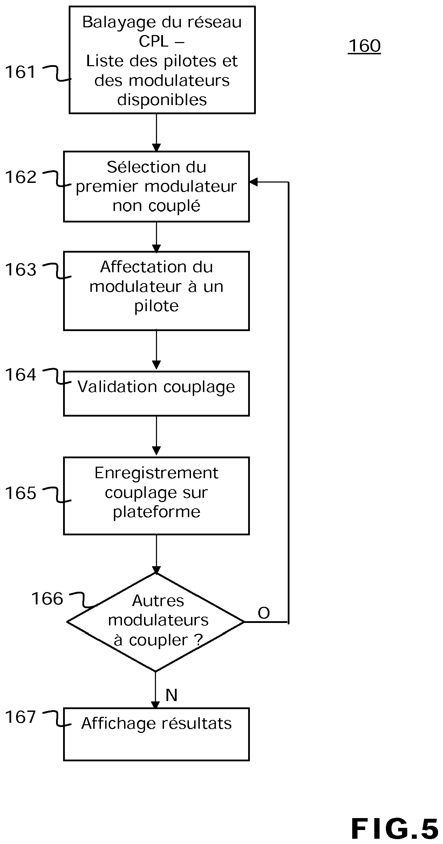

Lorsqu'un boîtier pilote 1 valide a été trouvé, la procédure d'installation se poursuit avec le couplage (ou appairage) de ce boîtier pilote 1 avec le ou les boîtiers modulateurs les plus proches. Cette étape 160 est détaillée à la figure 5 et décrite ci-après :
Le boîtier pilote d'installation 8 commence par effectuer un balayage du réseau domotique local, ici le réseau CPL, afin d'établir la liste de tous les boîtiers pilotes et modulateurs disponibles (étape 161), ainsi que leurs caractéristiques (connexion, opérateur mobile lié à un boîtier pilote, nombre de boîtiers modulateurs déjà couplés au boîtier pilote...). La procédure se poursuit par la recherche du premier boîtier modulateur non couplé (étape 162). On décide alors d'affecter ce premier boîtier modulateur sélectionné à un boîtier pilote ayant de l'espace disponible, cette décision pouvant être prise soit par la plateforme centrale 3, soit par le boîtier pilote d'installation 8 (étape 163). Dans ce dernier cas, le processus d'affectation est plus rapide, mais moins souple. L'algorithme de définition du meilleur pilote peut être varié en fonction des besoins et des paramètres à optimiser (coût, performance technique). L'appairage est ensuite validé par le boîtier pilote 5 et le boîtier modulateur 1 concernés, et mis à jour dans le boîtier pilote d'installation (étape 164). Toutes les informations liées à l'appairage sont ensuite transmises à la plateforme centrale 3 via la connexion GPRS ou 3G pour stockage dans la base de données (étape 165). Les étapes 162 à 165 sont réitérées tant qu'il existe encore dans la liste un boîtier modulateur à coupler (test effectué à l'étape 166). Le processus d'appairage se termine avantageusement par un affichage des résultats finals, au niveau de l'écran 8h, permettant au technicien installateur de vérifier s'il existe des modulateurs et/ou des pilotes orphelins et d'entreprendre le cas échéant toute action appropriée (étape 167). Ici encore, l'une des LEDs 8i et/ou l'écran 8h peut servir à valider ou non la fin du processus d'appairage.

A l'issue du processus d'appairage, toutes les données relatives à chaque boîtier pilote 1, notamment sa localisation, ses différents couplages, l'opérateur mobile associé pour la connexion GPRS ou 3G (étape 170 sur la figure 3), peuvent être envoyées automatiquement à la plateforme, avec ou non une vérification manuelle.

Le technicien installateur commande alors le pilote d'installation 8 pour que ce dernier lance une série de tests destinés à vérifier le bon fonctionnement des différents boîtiers pilotes 5 (étape 171). Les tests effectués pour chaque boîtier pilote #j sont notamment les suivants :

### ∘ Connexion CPL :

Le boîtier pilote d'installation 8 vérifie qu'il peut communiquer en CPL (ou selon le protocole de liaison adopté pour le réseau domotique local) avec le boîtier pilote #j.

### ∘ Connexion cellulaire :

Sur demande par le boîtier pilote d'installation 8, le boîtier pilote #j teste une connexion GPRS ou 3G à la plateforme centrale 3 en passant par l'opérateur mobile qui lui a été affecté.

### ∘ Connexion appareils de mesure (liaison radio ou CPL) :

Comme pour le cas des boîtiers modulateurs, des appareils de mesure, par exemple des capteurs de température, peuvent être reliés au boîtier pilote #j, par exemple par une connexion USB ou radio. Il convient dans ce cas de tester le boîtier modulateur par rapport à cette connexion. Sur ordre donné par le boîtier pilote d'installation 8 au boîtier pilote #j via un signal de commande CPL, le boîtier pilote #j demande à l'appareil de mesure de lui transmettre une mesure, et communique la mesure via le courant porteur de ligne au boîtier pilote d'installation. Le boîtier pilote d'installation 8 valide ou non le test en vérifiant que la mesure reçue est cohérente avec celle obtenue d'un appareil de mesure similaire et étalonné sur le pilote d'installation.

Le technicien installateur commande alors le pilote d'installation 8 pour que ce dernier lance une série de tests destinés à vérifier le bon fonctionnement de l'ensemble de l'installation (étape 172). Lors de ces tests, on vérifie notamment la réussite d'un ordre de modulation, puis de fin de modulation, pour chacun des couples pilote / modulateur.

Une installation réussie peut avantageusement se solder par la transmission automatique à la plateforme centrale 3 d'un numéro de fin d'installation attribué par le pilote d'installation 8 (étape 173).

De manière générale, la validité de l'installation peut être vérifiée par la plateforme centrale 3, les résultats de chacune des étapes 110 à 167 détaillées ci-dessus pouvant être transmis en temps réel par le boîtier pilote d'installation 8 à la plateforme centrale 3.

A tout moment lors de l'installation, le technicien installateur peut en outre prendre des photographies ou films de l'installation, charger ces photographies ou films par le port USB du boîtier pilote d'installation 8 de façon à les transmettre à la plateforme centrale 3 grâce à la connexion GPRS. Cela permet d'optimiser le Service après vente.

Grâce au boîtier pilote d'installation et à la procédure d'installation conforme à l'invention, les phases d'installation suivantes du réseau domotique ont été optimisées :
- Sélection de la meilleure connexion Internet (ADSL ou choix du meilleur opérateur mobile) ;
- Enregistrement avec le serveur central du système. Cette phase permet de valider la connexion Internet, ainsi que la vérification ou l'enregistrement de données utilisateur (nom, adresse, mais aussi type d'installation, paramétrage, etc.) ;
- optimisation du nombre de boîtiers pilotes à installer ;
- validation immédiate du bon fonctionnement de chaque appareil de l'installation domotique, grâce à des programmes de tests installés dans la mémoire 8, remplacement ou désinstallation de matériel si besoin.

Il en résulte une réduction importante du temps d'intervention, et donc du coût affecté aux installations.

## Revendications

1. Procédé d'assistance à l'installation d'un système domotique comprenant une pluralité de boîtiers communiquant (1) et au moins un boîtier pilote (5) aptes à échanger entre eux des informations via un réseau domotique local (7), ledit au moins un boîtier pilote (5) étant apte à échanger également des informations avec une plateforme centrale (3) du réseau Internet via une connexion sans fil de type téléphonie par paquet, **caractérisé en ce qu'**il comporte les étapes suivantes :
- branchement (120) d'un boîtier pilote d'installation (8) portatif par connexion dans ledit réseau domotique local (7), ledit boîtier pilote d'installation (8) portatif comportant d'une part, un modem (8d) pour échanger localement des données avec les boîtiers communiquant du réseau domotique local (7) et avec ledit au moins un boîtier pilote (5), et d'autre part, un modem (8e) pour accéder au réseau Internet pour échanger des données avec la plateforme centrale (3) via une connexion sans fil pour chaque opérateur mobile d'une liste prédéfinie d'opérateurs mobiles ;
- test automatique in situ, à partir du boîtier pilote d'installation (8) portatif, de chaque connexion à la plateforme centrale pour chaque opérateur mobile de ladite liste et sélection (136), par le boîtier pilote d'installation (8) portatif, de l'opérateur mobile de la liste offrant la meilleure connexion;
- équipement dudit au moins un boîtier pilote (5) avec une carte SIM correspondant à l'opérateur mobile sélectionné ;
- appairage (160) automatique, à partir dudit boîtier pilote d'installation (8) portatif, de chaque boîtier communiquant avec ledit au moins un boîtier pilote (5) dudit réseau domotique local (7);
- tests (142-145, 150, 171, 172) de fonctionnement de chaque boîtier communiquant du système et du système complet à partir dudit boîtier pilote d'installation (8), lesdits tests de fonctionnement comportant un test par ledit au moins un boîtier pilote (5), sur demande par ledit boîtier pilote d'installation (8) portatif, de la connexion à la plateforme centrale (3) en passant par ledit opérateur mobile sélectionné.

2. Procédé selon la revendication 1, **caractérisé en ce qu'**il comporte en outre les étapes suivantes :
- saisie (140, 170) locale, à partir dudit boîtier pilote d'installation (8), d'informations spécifiques à l'installation ;
- transmission (141) automatique desdites informations spécifiques depuis le boîtier pilote d'installation (8) vers la plateforme centrale (3) par l'intermédiaire de ladite connexion sans fil ou d'une connexion Ethernet.

3. Procédé selon l'une quelconque des revendications précédentes, **caractérisé en ce que** l'étape de test de chaque connexion du boîtier pilote d'installation (8) portatif à la plateforme centrale (3) comporte les sous-étapes suivantes :
- transfert (132) d'un fichier court via chaque connexion ;
- mesure et stockage (133) des paramètres techniques de chaque connexion à partir du fichier court transféré;
- calcul d'une somme pondérée desdits paramètres techniques pour chaque connexion ;
et **en ce que** l'opérateur mobile sélectionné est celui auquel correspond la plus grande somme pondérée.

4. Procédé selon la revendication 3, **caractérisé en ce que** lesdits paramètres techniques comprennent la qualité du signal correspondant au fichier transféré et le débit de la connexion.

5. Procédé selon l'une quelconque des revendications 3 et 4, **caractérisé en ce qu'**il comporte en outre une sous-étape (135) de récupération automatique de paramètres supplémentaires relatifs à la tarification de chaque opérateur mobile, et **en ce que** ladite somme pondérée dépend également desdits paramètres supplémentaires.

6. Procédé selon l'une quelconque des revendications précédentes, **caractérisé en ce que** l'étape d'appairage (160) comporte les sous-étapes suivantes :
- balayage (161) par le boîtier pilote d'installation du réseau domotique local (7) et établissement d'une liste des boîtiers communiquant (1) et pilotes (5) présents sur le réseau domotique local (7) ;
- pour chaque boîtier communiquant non apparié, recherche (163) d'un boîtier pilote disponible et appairage avec ledit boîtier pilote disponible ;
- transmission (165) par le boîtier pilote d'installation (8) des informations liées à chaque appairage à la plateforme centrale (3) via la connexion sans fil.

7. Procédé selon l'une quelconque des revendications précédentes, **caractérisé en ce que** lesdits boîtiers communiquant (1) comprennent au moins un boîtier modulateur (1) apte à mesurer en temps réel des tensions et des courants consommés par au moins un appareil électrique (2) qui lui est connecté, et à transmettre les mesures à ladite plateforme centrale (3) par l'intermédiaire dudit au moins un boîtier pilote (5).

8. Procédé selon la revendication 7, **caractérisé en ce que** le boîtier pilote (5) et le boîtier modulateur (1) sont intégrés dans un même boîtier.

9. Procédé selon les revendications 7 ou 8, **caractérisé en ce que** les étapes de tests comportent :
- la mesure, sur commande du boîtier pilote d'installation (8), de la tension et du courant dudit appareil électrique par le boîtier modulateur (1) et la transmission de cette mesure au boîtier pilote d'installation ;
- la vérification de la réussite d'un ordre de modulation puis de fin de modulation entre ledit boîtier pilote (5) et ledit boîtier modulateur (1).

10. Procédé selon l'une quelconques des revendications précédentes, **caractérisé en ce que** le réseau domotique local (7) est un réseau courant porteur de ligne.

11. Procédé selon l'une quelconques des revendications 1 à 9, **caractérisé en ce que** le réseau domotique local (7) est un réseau radiofréquence.

12. Boîtier pilote d'installation (8) portatif pour la mise en oeuvre du procédé selon l'une quelconque des revendications précédentes, **caractérisé en ce qu'**il comporte :
- d'un modem (8d) permettant au boîtier pilote d'installation (8) portatif d'échanger localement des données avec ladite pluralité de boîtiers communiquant (1) et avec ledit au moins un boîtier pilote (5) du réseau domotique local définis dans la revendication 1 ;
- d'un modem (8e) permettant au boîtier pilote d'installation (8) portatif d'accéder au réseau Internet pour échanger des données avec la plateforme centrale (3) via une connexion sans fil pour chaque opérateur mobile de la liste prédéfinie d'opérateurs mobiles définie dans la revendication 1 ;
- des routines logicielles stockées dans une mémoire morte (8b), aptes à mettre en oeuvre lesdites étapes de test automatique in situ, d'appairage et de tests de fonctionnement définies dans la revendication 1.

13. Boîtier pilote d'installation (8) portatif selon la revendication 12, **caractérisé en ce qu'**il comprend en outre un écran (8h) et un clavier (8g).

## Patentansprüche

1. Verfahren zur Unterstützung der Installation eines Domotiksystems, umfassend eine Vielzahl von kommunizierenden Gehäusen (1) und mindestens ein Führungsgehäuse (5), die ausgelegt sind, um untereinander Informationen über ein lokales Domotiknetz (7) auszutauschen, wobei das mindestens eine Führungsgehäuse (5) ausgelegt ist, um ebenfalls Informationen mit einer zentralen Plattform (3) des Internets über eine drahtlose Verbindung vom Typ Paket-Telefonie auszutauschen, **dadurch gekennzeichnet, dass** es die folgenden Schritte umfasst:
- Anschluss (120) eines tragbaren Führungsgehäuses (8) durch Verbindung in dem lokalen Domotiknetz (7), wobei das tragbare Führungsgehäuse zur Installation (8) einerseits ein Modem (8d) umfasst, um lokal Daten mit den Gehäusen, die mit dem lokalen Domotiknetz (7) kommunizieren, und mit dem mindestens ein Führungsgehäuse (5) auszutauschen, und andererseits ein Modem (8e), um auf das Internet zuzugreifen, um Daten mit der zentralen Plattform (3) über eine drahtlose Verbindung für jeden mobilen Betreiber einer vordefinierten Liste von mobilen Betreibern auszutauschen,
- automatischer Test *in situ* ausgehend von einem tragbaren Führungsgehäuse zur Installation (8) jeder Verbindung mit der zentralen Plattform für jeden mobilen Betreiber der Liste und Auswählen (136), durch das tragbare Führungsgehäuse zur Installation (8), des mobilen Betreibers der Liste, der die beste Verbindung bietet;
- Ausrüsten des mindestens einen Führungsgehäuses (5) mit einer SIM-Karte, die dem ausgewählten mobilen Betreiber entspricht;
- automatisches Paarbilden (160), ausgehend vom tragbaren Führungsgehäuse zur Installation (8), jedes Gehäuses, das mit dem mindestens einem Führungsgehäuse (5) des lokalen Domotiknetzes (7) kommuniziert;
- Funktionstests (142-145, 150, 171, 172) jedes Gehäuses, das mit dem System kommuniziert, und des vollständigen Systems ausgehend von dem Führungsgehäuse zur Installation (8), wobei die Funktionstests einen Test durch das mindestens eine Führungsgehäuse (5) auf Anfrage durch das tragbare Führungsgehäuse zu Installation (8) der Verbindung an die zentrale Plattform (3) über die ausgewählten mobilen Betreiber umfassen.

2. Verfahren nach Anspruch 1, **dadurch gekennzeichnet, dass** es außerdem die folgenden Schritte umfasst:
- lokales Erfassen (140, 170), ausgehend von dem Führungsgehäuse zur Installation (8), von spezifischen Informationen zur Installation;
- automatisches Übertragen (141) der spezifischen Informationen vom Führungsgehäuse zur Installation (8) zur zentralen Plattform (3) mit Hilfe der drahtlosen Verbindung oder einer Ethernet-Verbindung.

3. Verfahren nach einem beliebigen der vorhergehenden Ansprüche, **dadurch gekennzeichnet, dass** der Schritt des Testens jeder Verbindung des tragbaren Führungsgehäuses zur Installation (8) mit der zentralen Plattform (3) die folgenden Unterschritte umfasst:
- Übertragen (132) einer kurzen Datei über jede Verbindung;
- Messen und Speichern (133) der technischen Parameter jeder Verbindung ausgehend von der übertragenen kurzen Datei;
- Berechnen einer gewichteten Summe der technischen Parameter für jede Verbindung;
und dadurch, dass der ausgewählte mobile Betreiber derjenige ist, dem die größte gewichtete Summe entspricht.

4. Verfahren nach Anspruch 3, **dadurch gekennzeichnet, dass** die technischen Parameter die Qualität des Signals, das der übertragenen Datei entspricht, und dem Durchsatz der Verbindung umfassen.

5. Verfahren nach einem beliebigen der Ansprüche 3 und 4, **dadurch gekennzeichnet, dass** es außerdem einen Unterschritt (135) des automatischen Wiedergewinnens von zusätzlichen Parametern mit Bezug auf die Tarifierung jedes mobilen Betreibers umfasst, und dadurch, dass die gewichtete Summe auch von den zusätzlichen Parametern abhängt.

6. Verfahren nach einem beliebigen der vorhergehenden Ansprüche, **dadurch gekennzeichnet, dass** der Schritt des Paarbildens (160) die folgenden Unterschritte umfasst:
- Abtasten (161) durch das Führungsgehäuse zur Installation des lokalen Domotiknetzes (7) und Festsetzen einer Liste von kommunizierenden (1) und Führungsgehäusen (5), die im lokalen Domotiknetz (7) vorhanden sind;
- für jedes kommunizierende, nicht paargebildete Gehäuse Suchen (163) nach einem verfügbaren Führungsgehäuse und Paarbilden mit dem verfügbaren Führungsgehäuse;
- Übertragen (165) durch das Führungsgehäuse zur Installation (8) von Informationen, die mit jeder Paarbildung mit der zentralen Plattform (3) über die drahtlose Verbindung verbunden sind.

7. Verfahren nach einem beliebigen der vorhergehenden Ansprüche, **dadurch gekennzeichnet, dass** die kommunizierenden Gehäuse (1) mindestens ein Modulationsgehäuse (1) umfassen, das ausgelegt ist, um in Echtzeit Spannungen und Ströme zu messen, die von mindestens einem elektrischen Gerät (2) verbraucht werden, das mit ihm verbunden ist, und um die Messungen an die zentrale Plattform (3) mit Hilfe des mindestens einen Führungsgehäuses (5) zu übertragen.

8. Verfahren nach Anspruch 7, **dadurch gekennzeichnet, dass** das Führungsgehäuse (5) und das Modulationsgehäuse (1) in ein gleiches Gehäuse integriert sind.

9. Verfahren nach Anspruch 7 oder 8, **dadurch gekennzeichnet, dass** die Schritte des Testens Folgendes umfassen:
- das Messen, auf Anordnung des Führungsgehäuses zur Installation (8), der Spannung und des Stroms des elektrischen Geräts durch das Modulationsgehäuse (1) und die Übertragung dieser Messung an das Führungsgehäuse zur Installation;
- das Überprüfen des Erfolgs eines Befehls der Modulation, dann des Endes der Modulation zwischen dem Führungsgehäuse (5) und dem Modulationsgehäuse (1).

10. Verfahren nach einem beliebigen der vorhergehenden Ansprüche, **dadurch gekennzeichnet, dass** das lokale Domotiknetz (7) ein Netz zur Datenübertragung aus dem Stromnetz ist.

11. Verfahren nach einem beliebigen der Ansprüche 1 bis 9, **dadurch gekennzeichnet, dass** das lokale Domotiknetz (7) ein Radiofrequenznetz ist.

12. Tragbares Führungsgehäuse zur Installation (8) zur Durchführung des Verfahrens nach einem beliebigen der vorhergehenden Ansprüche, **dadurch gekennzeichnet, dass** es Folgendes umfasst:
- ein Modem (8d), das dem tragbaren Führungsgehäuse (8) zur Installation (8) ermöglicht, lokal Daten mit der Vielzahl von kommunizierenden Gehäusen (1) und mit dem mindestens ein Führungsgehäuse (5) des lokalen Domotiknetzes, definiert in Anspruch 1, auszutauschen;
- ein Modem (8e), das dem tragbaren Führungsgehäuse zur Installation (8) ermöglicht, auf das Internet zuzugreifen, um Daten mit der zentralen Plattform (3) über eine drahtlose Verbindung für jeden mobilen Betreiber der vordefinierten Liste von mobilen Betreibern, definiert in Anspruch 1, auszutauschen,
- Softwareroutinen, die in einem Festwertspeicher (8b) gespeichert sind, die dazu in der Lage sind, die Schritte des automatischen Tests *in situ,* des Paarbildens und des Funktionstestens, definiert in Anspruch 1, durchzuführen.

13. Tragbares Führungsgehäuse zu Installation (8) nach Anspruch 12, **dadurch gekennzeichnet, dass** es außerdem einen Bildschirm (8h) und eine Tastatur (8g) umfasst.

## Claims

1. A method for assisting with the installation of a home automation system comprising a plurality of communicating units (1) and at least one control unit (5) that are able to exchange information with one another via a local home automation network (7), said at least one control unit (5) also being able to exchange information with a central platform (3) of the Internet network via a wireless connection of the telephony type by packets, **characterized in that** it includes the following steps:
- connecting (120) a portable installation control unit (8) by connection and said local home automation network (7), said portable installation control unit (8) comprising, on the one hand, a modem (8d) for locally exchanging data with the communicating units of the local home automation network (7) and with said at least one control unit (5), and on the other hand, a modem (8e) for accessing the Internet network to exchange data with the central platform (3) via a wireless connection for each mobile operator from a predefined list of mobile operators;
- *in situ* automatic test, from the portable installation control unit (8), of each connection to the central platform for each mobile operator from said list and selection (136), by the portable installation control unit (8), of the mobile operator from the list offering the best connection;
- equipping said at least one control unit (5) with a SIM card corresponding to the selected mobile operator;
- automatically pairing (160), from said portable installation control unit (8), each communicating unit with said at least one control unit (5) of said local home automation network (7);
- operating tests (142-145, 150, 171, 172) of each communicating unit of the system and of the complete system from said installation control unit (8), said operating tests including a test by said at least one control unit (5), on demand by said portable installation control unit (8), of the connection to the central platform (3) by going through said selected mobile operator.

2. The method according to claim 1, **characterized in that** it further includes the following steps:
- locally entering (140, 170), from said installation control unit (8), information specific to the installation;
- automatically sending (141) said specific information from the installation control unit (8) to the central platform (3) via said wireless connection or an Ethernet connection.

3. The method according to any one of the preceding claims, **characterized in that** the step for testing each connection of the portable installation control unit (8) to the central platform (3) includes the following sub-steps:
- transferring (132) a short file via each connection;
- measuring and storing (133) technical parameters of each connection from the transferred short file;
- calculating a weighted sum of said technical parameters for each connection;
and **in that** the selected mobile operator is that to which the largest weighted sum corresponds.

4. The method according to claim 3, **characterized in that** said technical parameters comprise the quality of the signal corresponding to the transferred file and the throughput of the connection.

5. The method according to any one of claims 3 and 4, **characterized in that** it further includes a sub-step (135) for automatically recovering additional parameters relative to the rate structure of each mobile operator, and **in that** said weighted sum also depends on said additional parameters.

6. The method according to any one of the preceding claims, **characterized in that** the pairing step (160) includes the following sub-steps:
- sweeping (161) by the installation control unit of the local home automation network (7) and establishment of a list of communicating (1) and control (5) units present on the local home automation network (7);
- for each non-paired communicating unit, searching (163) for an available control unit and pairing with said available control unit;
- transmission (165) by the installation control unit (8) of the information related to each pairing to the central platform (3) via the wireless connection.

7. The method according to any one of the preceding claims, **characterized in that** said communicating units (1) comprise at least one modulator unit (1) able to measure, in real-time, voltages and currents consumed by at least one electrical apparatus (2) that is connected to it, and to send the measurements to said central platform (3) via said at least one control unit (5).

8. The method according to claim 7, **characterized in that** the control unit (5) and the modulator unit (1) are integrated into a same unit.

9. The method according to claims 7 or 8, **characterized in that** the test steps include:
- measuring, on command from the installation control unit (8), the voltage and the current of said electrical apparatus via the modulator unit (1), and sending this measurement to the installation control unit;
- verifying the success of a modulation order, then end of modulation between said control unit (5) and said modulator unit (1).

10. The method according to any one of the preceding claims, **characterized in that** the local home automation network (7) is a powerline communication network.

11. The method according to any one of claims 1 to 9, **characterized in that** the local home automation network (7) is a radiofrequency network.

12. A portable installation control unit (8) for carrying out the method according to any one of the preceding claims, **characterized in that** it includes:
- a modem (8d) allowing the portable installation control unit (8) to exchange data locally with said plurality of communicating units (1) and with said at least one control unit (5) of the local home automation network defined in claim 1;
- a modem (8e) allowing the portable installation control unit (8) to access the Internet network to exchange data with the central platform (3) via a wireless connection for each mobile operator from the predefined list of mobile operators defined in claim 1;
- software routines stored in a read-only memory (8b), able to carry out said *in situ* automatic test, pairing, and operating test steps defined in claim 1.

13. The portable installation control unit (8) according to claim 12, **characterized in that** it further comprises a screen (8h) and a keyboard (8g).
